# EUROPEAN PATENT APPLICATION

(11) **EP 1 367 821 A2**
(43) Date of publication of application: **03.12.2003**
(21) Application number: 03250195.9
(22) Date of filing: 13.01.2003
(51) Int. Cl.: H04N 5/44

(54) **Interconnecting television-related apparatuses**

(30) Priority: 20.05.2002 KR 2002027675
(71) Applicant: SAMSUNG ELECTRONICS CO., LTD., Suwon-City, Kyungki-do (KR)
(72) Inventor: Kang, Byung-ook, Suwon-city, Gyunggi-do (KR)
(74) Representative: Geary, Stuart Lloyd

(57) **Abstract**

A television-related apparatus has a SCART socket (110). Reserved terminals of the SCART socket (110) are used for serial data communication thereby avoiding the need for a separate RS-232 socket on the apparatus.

## Description

The present invention relates to an apparatus having a television-related function, the apparatus comprising a SCART connector and serial data communication means.

Set-top boxes are used for receiving cable, satellite and terrestrial digital television and providing an output video signal that can be displayed by a conventional television set. Some set-top boxes also provide Internet connectivity and other functions.

In Europe and the Middle East, television apparatus, including television sets, video recorders and set-top boxes, are often interconnected by SCART (Syndicat des Constructeurs d'Appareils Radiorecepteurs et Televiseurs) connectors. The SCART connector is also known as a Pertitel connector or an Euroconnector, and is regulated by CENELEC EN 50 049-1:1989 and IEC 933-1. The SCART connector provides for transmission of audio, video and control signals.

Set-top boxes often have an RS-232C connector for communication with a computer in addition to a SCART socket. RS-232C is a well-known and widely used serial communication standard established by the US Electronic Industries Association (EIA).

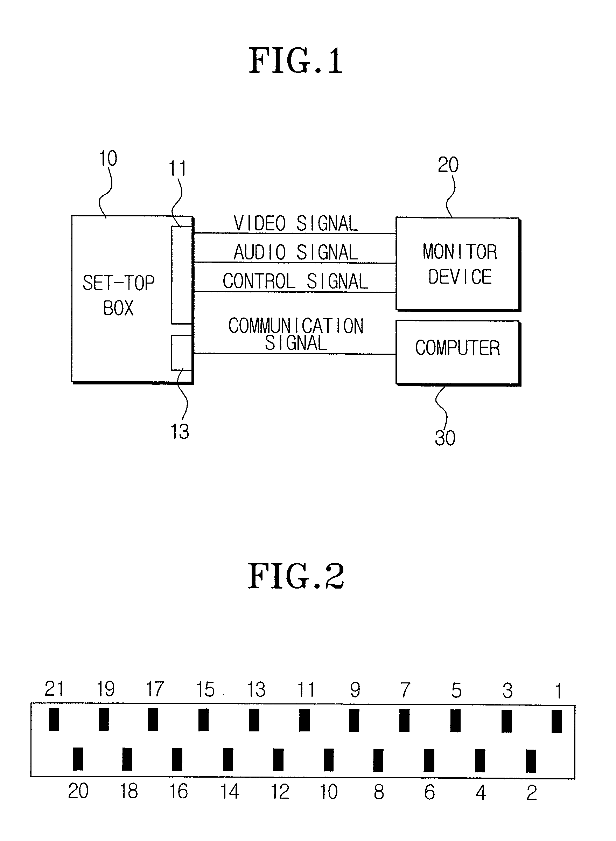

Figure 1 is a block diagram showing the connections between a set-top box, a television set and a computer. The set-top box 10 has a SCART socket 11 and an RS-232C connector 13. The television set 20 has a SCART socket which is connected to the SCART socket 11 of the set-top box 10. Video, audio and control signals are transmitted between the SCART sockets of the set-top box 10 and the television receiver 20. The computer 30 is connected by a serial cable to the RS-232C connector 13 of the set-top box 12 for data communication between the computer 30 and the set-top box 10.

The block diagram shows the set-top box 10 having both the television set 20 and the computer 30 connected to it. However, the set-top box is not generally used while connected to both the television set 20 and the computer 30. In addition, the computer 30 is in practice rarely connected to the set-top box 10 by the serial cable. The RS-232C connector 13 of the set-top box is primarily used during manufacture and maintenance for testing and fault diagnosis.

Nevertheless, if a set-top box 10 has both a SCART socket 11 and a RS-232C connector 13, not only is a separate RS-232C connector 13 necessary but also space is needed for the RS-232C connector 13 in the set-top box. These requirements are obstacles to the miniaturization of set-top boxes.

An apparatus, for example a set-top box, according to the present invention is characterised in that the serial data communication means employs reserved terminals of the SCART connector for serial data communication.

Thus, the RS-232C connector can be omitted with no loss of functionality.

Preferably, pin 10 of the SCART connector is used serial data transmission and pin 12 of the SCART connector is used for serial data reception.

Preferably, the serial data communication means is operable for communication with RS-232 terminals.

Preferably, the SCART connector is a SCART socket.

An embodiment of the present invention will now be described, by way of example, with reference to Figures 2 to 4 of the accompanying drawings, in which:
Figure 1 is a block diagram showing the conventional connections between a set-top box, a television set and a computer;
Figure 2 schematically illustrates the pin arrangement of a SCART connector;
Figure 3A is a block diagram showing the connection between a set-top box and a television set according to the present invention;
Figure 3B is a block diagram showing the connection between a set-top box and a computer according to the invention; and
Figure 4 is a block diagram showing SCART connector interfacing according to the present invention.

Referring to Figure 2, a SCART plug has 21 pins, some of which are variously allocated to input and output audio, video and control signals. A SCART socket is mounted to an apparatus, e.g. a set-top box, to be connected by a SCART cable which has a SCART plugs. Signals passing through the SCART cable vary according to the device connected thereto and examples are given in Tables 1 to 4.

Table 1 indicates signals passing through a SCART cable in the case of an RGB connection.

**[Table 1]**

| output connector | | input connector | |
|---|---|---|---|
| 1 | audio right out | 2 | audio right in |
| 3 | audio left (or mono) out | 6 | audio left (or mono) in |
| 4 | audio return | 4 | audio return |
| 7 | blue out | 7 | blue in |
| 5 | blue return | 5 | blue return |
| 11 | green out | 11 | green in |
| 9 | green return | 9 | green return |
| 15 | red out | 15 | red in |
| 13 | red return | 13 | red return |
| 16 | RGB status out | 16 | RGB status in |
| 14 | RGB status return | 14 | RGB status return |
| 19 | Sync (composite video) out | 20 | Sync (composite video) in |
| 17 | Sync return | 18 | Sync return |
| 21 | shield | 21 | shield |

Table 2 indicates signals passing through a SCART cable in the case of an S-video connection.

**[Table 2]**

| output connector | | input connector | |
|---|---|---|---|
| 1 | audio right out | 2 | audio right in |
| 3 | audio left (or mono) out | 6 | audio left (or mono) in |
| 4 | audio return | 4 | audio return |
| 15 | chrominance out | 15 | chrominance in |
| 13 | chrominance return | 13 | chrominance return |
| 8 | video status out | 8 | video status in |
| 19 | luminance out | 20 | luminance in |
| 17 | luminance return | 18 | luminance return |
| 21 | shield | 21 | shield |

Table 3 indicates signals passing through a SCART cable in the case of a composition video connection.

**[Table 3]**

| output connector | | input connector | |
|---|---|---|---|
| 1 | audio right out | 2 | audio right in |
| 3 | audio left (or mono) out | 6 | audio left (or mono) in |
| 4 | audio return | 4 | audio return |
| 8 | video status out | 8 | video status in |
| 19 | composite video out | 20 | composite video in |
| 17 | composite video return | 18 | composite video return |
| 21 | shield | 21 | shield |

Table 4 indicates signals passing through a SCART cable in the case of a decoder connection.

**[Table 4]**

| receiver connector | | decoder connector | |
|---|---|---|---|
| 1 | audio right out | 2 | audio right in |
| 2 | audio right in | 1 | audio right out |
| 3 | audio left out | 6 | audio left in |
| 6 | audio left in | 3 | audio left out |
| 4 | audio return | 4 | audio return |
| 8 | video status in | 8 | video status out |
| 19 | baseband out (scrambled) | 20 | baseband in |
| 17 | baseband out return | 18 | baseband in return |
| 20 | composite video in (unscrambled) | 19 | composite video out |
| 18 | composite video in return | 17 | composite video out return |
| 21 | shield | 21 | shield |

As shown in Table 1 to 4, pins 10 and 12 are reserved pins and are not currently used. Accordingly, these reserved pins may be used for serial data communication.

However, the RS-232C specification requires a transmission signal wire (TX), a reception signal wire (RX), 5 control signal wires (CTS, RTS, DTR, DSR, DCD), and 2 earth wires (SG, FG). However, only the TX and RX signal wires and an earth wire are required for basic serial communication. Therefore, if the TX signal wire is connected to pin 10 of the SCART connector and the RX signal wire to pin 12, or vice versa, and the earth wire is connected to the pin 21, these pins can be used to replace the RS-232C connector.

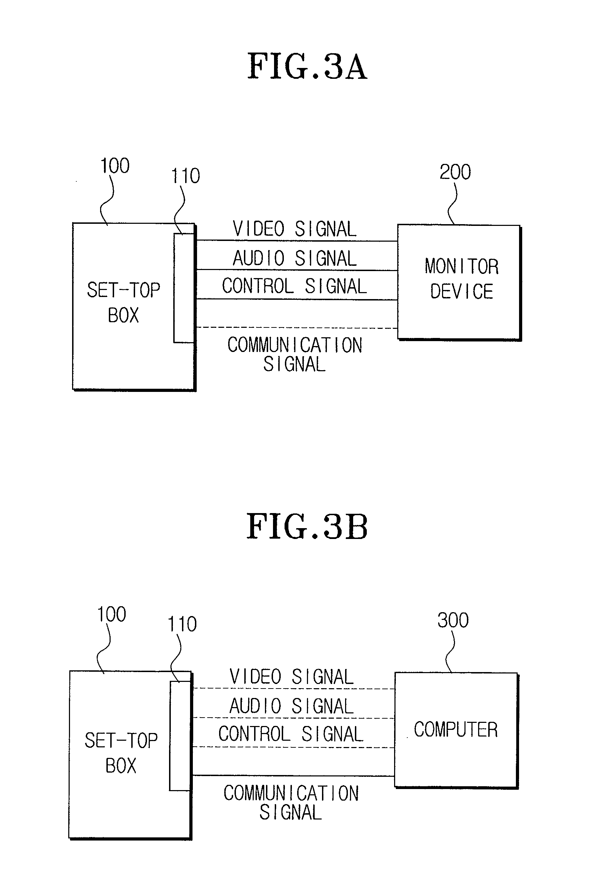

Referring to Figures 3A and 3B, a set-top box has a SCART socket 110, and can be connected to a television set 200 and a computer 300 through the SCART socket 110.

Referring in particular to Figure 3A, video, audio and control signals (indicated by solid lines) are transmitted between the set-top box 100 and the television set 200 through the SCART socket 110. The communication signal lines (indicated in a dotted line in the drawing) are unused in this configuration.

Referring in particular to Figure 3B, a communication signal (indicated by a solid line) is transmitted between the set-top box and the computer 300 through the SCART socket 110. The video, audio, and control signal lines (indicated by dotted lines) are not used in this configuration. In this case, the connection is made between pins 10, 12 and 21 only of the SCART socket 110 and an RS-232C connector of the computer 300.

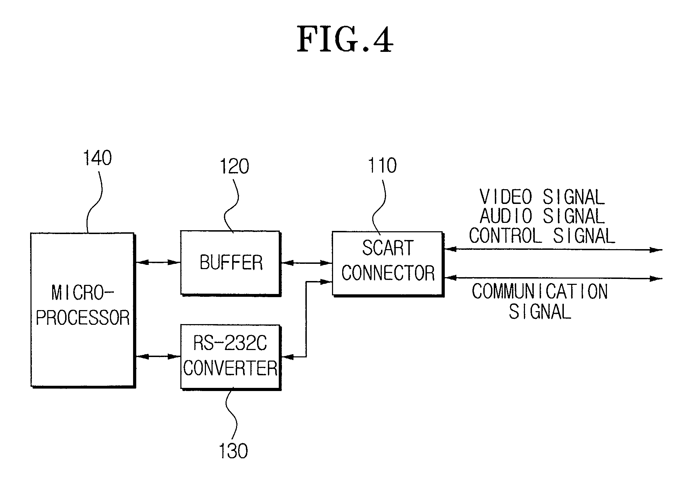

Referring to Figure 4, the set-top box 100 has a SCART socket 110, a buffer 120, an RS-232C converter 130 and a microprocessor 140. The microprocessor 140 controls the set-top box 100 and communicates with external devices connected to the set-top box 100. The buffer 120 is located between the microprocessor 140 and the SCART socket 110 and buffers video, audio and control signals. The RS-232C converter 130 is located between the microprocessor 140 and the SCART connector 110 and matches the voltage level of signals used for RS-232C communication and the voltage level of signals used by the microprocessor 140.

Using such a structure, a single SCART socket can be used for conventional SCART SCART signals and for serial data communication to replace an RS-232C connector.

As described above, according to the present invention, a single SCART socket can be used as a common SCART and RS-232C connector enabling RS-232C serial communication when required. Accordingly, no separate RS-232C connector is necessary and reducing the number parts and assisting miniaturization.

## Claims

1. An apparatus having a television-related function, the apparatus comprising:
a SCART connector (110); and
serial data communication means (130),
**characterised in that**
the serial data communication means (130) employs reserved terminals of the SCART connector (110) for serial data communication.

2. An apparatus according to claim 1, wherein pin 10 of the SCART connector (110) is used serial data transmission and pin 12 of the SCART connector (110) is used for serial data reception.

3. An apparatus according to claim 1 or 2, wherein the serial data communication means (130) is operable for communication with RS-232 terminals.

4. An apparatus according to claim 1, 2 or 3, wherein the SCART connector (110) is a SCART socket.

5. A set-top box according to any preceding claim.

6. A SCART connector disposed in a body and connected with signals for connection with external devices, wherein the SCART connector is provided with communication terminal pins for communication between the body and other devices.

7. The SCART connector according to claim 6, wherein the communication terminal pins use preserved pins of the SCART connector.

8. The SCART connector according to claim 6, wherein the communication terminal pins are RS-232C series communication terminal pins.

9. The SCART connector according to claim 8, wherein a TX signal of RS-232C series communication is connected to pin number 10 of the SCART connector, an RX signal to pin number 12 of the SCART connector, and earthing to pin number 21 of the SCART connector.

10. The SCART connector according to claim 6, wherein the body is a set-top box.
